# EUROPEAN PATENT APPLICATION

(11) **EP 2 436 726 A1**
(43) Date of publication of application: **04.04.2012**
(21) Application number: 11180745.9
(22) Date of filing: 09.09.2011
(51) Int. Cl.: C08K 3/04, C08L 21/00, C09C 1/50

(54) **Rubber composition and pneumatic tire**

(30) Priority: 30.09.2010 JP 2010221854
(71) Applicant: Toyo Tire & Rubber Co. Ltd., Osaka-shi, Osaka 550-8661 (JP)
(72) Inventor: Hasegawa, Shinya, OSAKA-SHI, OSAKA, 550-8661 (JP)
(74) Representative: Hart-Davis, Jason

(57) **Abstract**

A rubber composition, comprising a rubber component, and a carbon black, the carbon black satisfying the dibutyl phthalate (DBP) absorption number [unit:mL/100g] of the carbon black is from 90 to 180, the difference of the BET specific surface area (BETS)[unit: m²/g] of the carbon black from the external specific surface area (STSA) [unit: m²/g] thereof satisfies the following: 5 < (BET5) - (STSA) < 12, the ratio between the Stokes diameter (Dst) of the carbon black and the Stokes diameter distribution (ΔD - 50 (half band width)) thereof satisfies the following: 0.70 < the ratio of (ΔD - 50)/(Dst) < 1.10, and the ratio between the BET specific surface area (BET5) [unit: m²/g] of the carbon black and the iodine adsorption number (IA) [unit: mg/g] thereof satisfies the following: 1.05 < the ratio of (BET5)/(IA) < 1.35.

## Description

### BACKGROUND OF THE INVENTION

### Field of the Invention

The present invention relates to a rubber composition which contains a rubber component and carbon black, and is useful as a raw material of a pneumatic tire, and further which has an improved low-exothermic-property while keeping abrasion resistance, workability and tearing resistance; and a pneumatic tire.

### Description of the Related Art

Hitherto, as a rubber reinforcing agent for pneumatic tires for automobiles or others, use has been made of carbon black, which is easily dispersed in rubber and can give abrasion resistance and other rubber physical properties thereto. It is known that the abrasion resistance of rubber is improved, for example, by making the particle diameter of the carbon black small, making the blend amount thereof large, making the structuring degree of aggregates of the carbon black aggregates high, or making the activity of particle surfaces of the carbon black high (increasing the number of functional groups in/on surfaces thereof).

In the meantime, from the viewpoint of energy saving, the rolling resistance of tires is strongly required to be decreased in the markets in order to save the consumption of fuel for automobiles. In order to decrease the rolling resistance of tires, it is effective to decrease hysteresis loss in tire tread regions, which are the highest in influence on the rolling resistance, so as to improve the low-exothermic-property (i.e., to restrain the generation of heat). In order to produce tires in which hysteresis loss is decreased to give an improved low-exothermic-property, for example, the following measures are adopted: the blend amount of carbon black used as a rubber reinforcing agent is reduced; the particle diameter of the carbon black is made large; the structuring degree of aggregates of the carbon black is made low; and silica and a silane coupling agent are together used.

However, in the case of controlling the particle diameter, the structure or some other property of carbon black (in a tire) to improve various physical properties of the tire, it is difficult that while keeping the abrasion resistance of the tire, the low-exothermic-property thereof is improved since the abrasion resistance and the low-exothermic-property have an antinomic relationship. Additionally, following the adjustment of the property or the blend amount of carbon black and further the use of silica together, the tearing resistance or the workability of the tire may deteriorate. It is therefore very difficult to improve the tire properties with a good balance.

Patent Document 1 states that a specified rubber composition can attain compatibility between abrasion resistance and a reduction in rolling resistance. The composition is a composition containing a carbon black (species) and a processing aid that is at least one of a fatty acid ester and a fatty acid metal salt, wherein the carbon black is a species about which the heat loss over temperatures from 150 to 450°C is 0.87% or more by mass, the toluene coloration permeability is 90% or more, and the ratio between the nitrogen adsorption specific surface area (N₂SA) [unit: m²/g] and the iodine adsorption number (IA) [unit: mg/g] is from 1.10 to 1.30. Patent Document 2 states that a specified rubber composition can attain compatibility between abrasion resistance and low-exothermic-property, the composition being a composition containing a carbon black about which the cetyl triammonium specific surface area (CTAB) [unit: m²/g], the ratio between the DBP absorption number (24M4DBP) [unit: mL/100g] and the CTAB, and the ratio between the CTAB and the IA are adjusted into the range of 115 to 145, that of 0.75 to 0.92 and that of 0.97 to 1.25, respectively, and further the following is satisfied: the tint strength (TINT) [unit: %] > -46.787 (24M4DBP/CTAB) + 168. Patent Document 3 states that a specified rubber composition can attain compatibility between abrasion resistance and low-exothermic-property, the composition being a composition containing a carbon black about which the ratio between the N₂SA and the IA, and the difference between the N₂SA and the CTAB are adjusted into the range of 1.20 to 1.30 and 5 or less, respectively. Furthermore, Patent Document 4 states that a specified rubber composition can attain compatibility between abrasion resistance and low-exothermic-property, the composition being a composition containing a carbon black about which the CTAB is 120 or more, the compressive DBP absorption number is 90 mL/100g or more, and the quantity of pores having a pore diameter of 25 to 30 nm which occupy the pore volume between aggregates (of particles of the carbon black) is 30 mL/100g or more.

[Patent Document 1]: JP-A-2009-40904
[Patent Document 2]: JP-A-2000-344945
[Patent Document 3]: JP-A-2007-231179
[Patent Document 4]: JP-A-2005-344063

### SUMMARY OF THE INVENTION

However, the inventors have made eager investigations to find out that it is difficult that the degree of pores in surfaces of carbon black aggregates can be precisely grasped only by optimizing the individual indexes of carbon black, to which attention is paid in the documents. The degree of pores in surfaces of carbon black aggregates produces a large effect, in particular, onto the abrasion resistance and the low-exothermic-property (of the rubber); thus, it has been understood that about the carbon black used in each of the documents, there remains a room for a further improvement, in particular, when the abrasion resistance and the low-exothermic-property can be made compatible with each other.

In light of the above-mentioned actual situation, the present invention has been made, and an object thereof is to provide a rubber composition which is a raw material of a pneumatic tire having an improved low-exothermic-property while keeping abrasion resistance, workability and tearing resistance.

In order to solve the problems, the inventor has made eager investigations about a manner for grasping the degree of pores in surfaces of carbon black aggregates precisely. As a result of the investigations, it is found that a carbon black about which the difference between the BET specific surface area (BET5) and the external specific surface area (STSA) is in a specified range is particularly preferred to attain compatibility between the abrasion resistance and the low-exothermic-property (of the carbon-black-containing rubber). Furthermore, the inventor found out that the low-exothermic-property of a tire can be improved while keeping the abrasion resistance, the workability and the tearing property of the tire by using, as a raw material, a rubber composition into which a carbon black is incorporated, this carbon black being a species optimal for a relationship among not only the BETS and the STSA but also the following: the dibutyl phthalate (DBP) absorption number (of the carbon black); the iodine adsorption number (IA); and the Stokes diameter (Dst) and the Stokes diameter distribution (ΔD - 50 (half band width)), these quantities being indexes that have been hitherto used as indexes representing properties of carbon black. The present invention has been made as a result of the above-mentioned investigations. The present invention, which attains the object, is as follows:

That is, the present invention relates to a rubber composition, comprising a rubber component, and a carbon black, wherein the carbon black satisfies the following (1) to (4):
(1) the dibutyl phthalate (DBP) absorption number [unit: mL/100g] of the carbon black is from 90 to 180,
(2) the difference of the BET specific surface area (BET5)[unit: m²/g] of the carbon black from the external specific surface area (STSA) [unit: m²/g] thereof satisfies the following: 5 < (BET5) - (STSA) < 12,
(3) the ratio between the Stokes diameter (Dst) of the carbon black and the Stokes diameter distribution (ΔD - 50 (half band width)) thereof satisfies the following: 0.70 < the ratio of (ΔD - 50)/(Dst) < 1.10, and
(4) the ratio between the BET specific surface area (BET5) [unit: m²/g] of the carbon black and the iodine adsorption number (IA) [unit: mg/g] thereof satisfies the following: 1.05 < the ratio of (BET5)/(IA) < 1.35.

Firstly, in the rubber composition according to the present invention, (1) the dibutyl phthalate (DBP) absorption number [mL/100g] of the carbon black is from 90 to 180. Thus, the composition can attain compatibility between abrasion resistance and low-exothermic-property with a good balance. The DBP absorption number is an index for the structure of carbon black aggregates. If the DBP absorption number is below the range described in the requirement (1), the structure of the carbon black aggregates is too low so that the abrasion resistance tends to deteriorate. By contrast, if the DBP absorption number is over the range described in the requirement (1), the structure of the carbon black aggregates is too high so that the low-exothermic-property tends to deteriorate.

Secondly, in the rubber composition according to the present invention, (2) the difference of the BET specific surface area (BET5) [m²/g] of the carbon black from the external specific surface area (STSA) [m²/g] thereof satisfies the following: 5 < (BET5) - (STSA) < 12. The BET specific surface area (BET5) and the external specific surface area (STSA) are each an index related to the specific surface area calculated out on the basis of the nitrogen absorption number (of the carbon black) . Thus, when the difference between the two is calculated out, the degree of pores in surfaces of the carbon black aggregates can be precisely grasped.

Rubber molecules cannot enter the pores in the surfaces of the carbon black aggregates. Thus, as the number of the pores is more, the degree of the bonding between the carbon black and the rubber molecules becomes weaker. Since the value of (BET5) - (STSA) in the present invention satisfies the requirement (2), the bonding between the carbon black and the rubber molecules is optimized so that the abrasion resistance and the low-exothermic-property can be made compatible with each other with a good balance.

Thirdly, in the rubber composition of the present invention, (3) the ratio between the Stokes diameter (Dst) of the carbon black and the Stokes diameter distribution (AD - 50 (half band width)) thereof satisfies the following: 0.70 < the ratio of (ΔD - 50) / (Dst)< 1.10. Thus, the abrasion resistance, the low-exothermic-property and the tearing resistance can be improved with a good balance. If the ratio of (ΔD - 50) / (Dst) is below the range described in the requirement (3), the low-exothermic-property tends to deteriorate. By contrast, if the ratio of (ΔD - 50)/(Dst) is over the range described in the requirement (3), the abrasion resistance and the tearing resistance tend to deteriorate.

Fourthly, in the rubber composition according to the present invention, (4) the ratio between the BET specific surface area (BET5) [m²/g] of the carbon black and the iodine adsorption number (IA) [mg/g] thereof satisfies the following: 1.05 < the ratio of (BET5)/(IA) < 1.35. Thus, the degree of the bonding between the carbon black and the rubber molecules is optimized so that the abrasion resistance and the low-exothermic-property can be improved with a good balance. The ratio of (BET5)/(IA) is an index of the surface activity of the carbon black particles. If the ratio of (BET5) / (IA) is below the range described in the requirement (4), the low-exothermic-property tends to deteriorate. By contrast, if the ratio of (BET5)/(IA) is over the range described in the requirement (4), the workability and the tearing resistance tend to deteriorate.

In the rubber composition, it is preferred that the external specific surface area (STSA) [unit: m²/g] of the carbon black is from 75 to 170. The STSA is an index of the specific surface area (the particle diameter) of carbon black particles. If the STSA, is less than 75, the abrasion resistance tends to deteriorate. If the STSA is more than 170, the low-exothermic-property tends to deteriorate.

In the rubber composition, it is preferred that the blend amount of the carbon black is from 30 to 60 parts by mass for 100 parts by mass of the rubber component. If the blend amount of the carbon black is less than 30 parts by mass, the carbon black is insufficient in reinforcing performance so that the abrasion resistance tends to deteriorate. If the amount is more than 60 parts by mass, the workability or the low-exothermic-property tends to deteriorate.

The present invention also relates to a pneumatic tire containing, as a constituting material thereof, the above-mentioned rubber composition. As descried above, the rubber composition according to the present invention has an improved low-exothermic-property while keeping Abrasion resistance, workability and tearing resistance. Accordingly, a pneumatic tire having a member produced by use of this rubber composition as a raw material is excellent in abrasion resistance, tearing resistance and low-exothermic-property, examples of the member including treads (a base tread and a cap tread), a side wall, a belt coating rubber, a ply rubber, and a bead filler. As a result, the member makes it possible to reduce the rolling resistance of the tire.

### BRIEF DESCRIPTION OF THE DRAWINGS

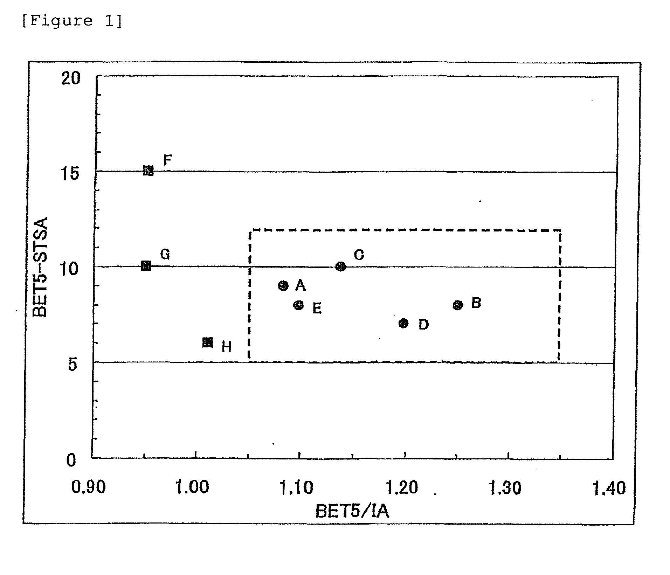

Fig. 1 is a graph in which the ratio of (BET5)/(IA) is taken as the transverse axis, the value of (BET5) - (STSA) is taken as the vertical axis, and values of individual carbon blacks are plotted.

### DETAILED DESCRIPTION OF THE PREFERRED EMBODIMENTS

The rubber composition according to the present invention contains a rubber component and a carbon black. In the present invention, the rubber component is preferably a diene rubber.

Examples of the diene rubber include natural rubber (NR), polyisoprene rubber (IR), styrene butadiene rubber (SBR), polybutadiene rubber (BR), butadiene rubber containing syndiotactic-1,2-polybutadiene (SPB), chloroprene rubber (CR) and nitrile rubber (NBR). These may be used alone or in the form of a blend of two or more thereof. As the need arises, these diene rubbers given as examples may each be modified in its terminal(s) (for example, terminal-modified BR or terminal-modified SBR), or may be reformed to have a desired property (for example, reformed NR). In the case of synthetic rubbers, the polymerization method therefor, the molecular weight thereof, and others are not particularly limited. In accordance with the moiety where the rubber is used, or the using manner thereof, the rubber species, and the blend ratio (when the rubber is a blend) may be appropriately selected. It is allowable about polybutadiene rubber (BR) to use a rubber synthesized by use of a cobalt (Co) catalyst, a neodymium (Nd) catalyst, a nickel (Ni) catalyst, a titanium (Ti) catalyst or a lithium (Li) catalyst, or a rubber synthesized by use of a polymerization catalyst composition containing a metallocene complex described in WO2007-129670.

The most distinctive feature of the present invention is that the carbon black to be used satisfies the requirements (1) to (4) below.
(1) the dibutyl phthalate (DBP) absorption number [unit: mL/100g] of the carbon black is from 90 to 180,
(2) the difference of the BET specific surface area (BETS)[unit: m²/g] of the carbon black from the external specific surface area (STSA) [unit: m²/g] thereof satisfies the following: 5 < (BET5) - (STSA) < 12,
(3) the ratio between the Stokes diameter (Dst) of the carbon black and the Stokes diameter distribution (ΔD - 50 (half band width)) thereof satisfies the following: 0.70 < the ratio of (ΔD - 50)/(Dst) < 1.10, and
(4) the ratio between the BET specific surface area (BET5) [unit: m²/g] of the carbon black and the iodine adsorption number (IA) [unit: mg/g] thereof satisfies the following: 1.05 < the ratio of (BET5)/(IA) < 1.35.

The carbon black satisfying the requirements (1) to (4) is less in the degree of pores in surfaces of carbon black aggregates than any carbon black of ISAF class (ASTM grade), which is ordinarily used in the tire industry, so as to be a carbon black especial in particle diameter, structure, and aggregate distribution. In the present invention, a rubber composition containing this carbon black is used as a raw material to make it possible to improve the low-exothermic-property while keeping abrasion resistance, workability and tearing resistance. More specifically, the present invention can realize abrasion resistance and tearing resistance equivalent to those of any rubber composition containing an ISAF-class-carbon black, and low-exothermic-property equivalent to that of any rubber composition containing an HAF-class-carbon black.

The carbon black contained in the rubber composition according to the present invention preferably has an external specific surface area (STSA) [m²/g] of 75 to 170. In this case, the abrasion resistance and the low-exothermic-property can be made compatible with each other with a better balance.

In the present invention, it is particularly preferred that the dibutyl phthalate (DBP) absorption number [unit: mL/100g] of the carbon black is from 120 to 150, the difference of the BET specific surface area (BET5) [unit: m²/g] of the carbon black from the external specific surface area (STSA) [unit: m²/g] thereof satisfies the following: 7 < (BET5) - (STSA) < 10, the ratio between the Stokes diameter (Dst) of the carbon black and the Stokes diameter distribution (ΔD - 50 (half band width)) thereof satisfies the following: 0.75 < the ratio of (ΔD - 50)/(Dst) < 0.95, and / or the ratio between the BET specific surface area (BET5) [unit: m²/g] of the carbon black and the iodine adsorption number (IA) [unit: mg/g] thereof satisfies the following: 1.10 < the ratio of (BET5) / (IA) < 1.30. Moreover, it is more particularly preferred that the external specific surface area (STSA) [unit: m²/g] of the carbon black is from 90 to 120.

Of the evaluating items for the carbon black properties, the dibutyl phthalate (DBP) absorption number [mL/100g] is measured in accordance with JIS K6217-4; the BET specific surface area (BET5) [m²/g] and the external specific surface area (STSA) [m²/g], JIS K6217-7; the Stokes diameter (Dst) and the Stokes diameter distribution (ΔD - 50 (half band width)), JIS K6217-6; and the iodine adsorption number (IA) [mg/g], JIS K 6217-1.

In the rubber composition according to the present invention, the blend amount of the carbon black is preferably from 30 to 60 parts by mass for 100 parts by mass of the rubber component. If the blend amount of the carbon black is less than 30 parts by mass, the carbon black is insufficient in reinforcing performance so that the abrasion resistance tends to deteriorate. If the amount is more than 60 parts by mass, the workability and the low-exothermic-property tend to deteriorate.

Together with the rubber component and the carbon black, one or more blending agents used ordinarily in the rubber industry may appropriately be blended with the rubber composition according to the present invention as far as the advantageous effects of the present invention are not damaged. Examples of the blending agent(s) include sulfur, silica, a silane coupling agent, zinc flower (zinc oxide), stearic acid, a curing accelerator, a curing acceleration aid, a curing retarder, an anti-ageing agent, a softening agent such as wax or oil, and a processing aid.

It is sufficient that the species of the sulfur is any ordinary sulfur species for rubber, and examples thereof include powdery sulfur, precipitated sulfur, insoluble sulfur, and high-dispersible sulfur. Considering the rubber physical property, the durability and others of the composition after the composition is cured, the blend amount of the sulfur is preferably from 0.5 to 15.0 parts by mass for 100 parts by mass of the rubber component.

The curing accelerator may be a curing accelerator used ordinarily for rubber curing. Examples thereof include sulfenamide based curing accelerator, thiuram based curing accelerator, thiazole based curing accelerator, thiourea based curing accelerator, guanidine based curing accelerator, dithiocarbamate based curing accelerator and the like. Such accelerators may be used alone or in the form of an appropriate mixture. Considering the rubber physical property, the durability and others after the curing, the blend amount of the curing accelerator is preferably from 0.1 to 10.0 parts by mass for 100 parts by mass of the rubber component.

The anti-ageing agent may be an anti-ageing agent used ordinarily used for rubber. Examples thereof include aromatic amine based anti-ageing agent, amine-ketone based anti-ageing agent, monophenol based anti-ageing agent, bisphenol based anti-ageing agent, polyphenol based anti-ageing agent, dithiocarbamate based anti-ageing agent, thiourea based anti-ageing agent and the like. Such agents may be used alone or in an appropriate mixture. Considering the rubber physical property, the durability and others, the blend amount of the anti-ageing agent is preferably from 0.0 to 15.0 parts by mass for 100 parts by mass of the rubber component.

The rubber composition according to the present invention may be obtained by kneading the rubber component, the carbon black, and the optional blending agent (s), which is/are used ordinarily in the rubber industry, by use of a mixing machine used in an ordinary rubber industry, such as a Banbury mixer, a kneader or rolls, the blending component (s) being, for example, sulfur, silica, a silane coupling agent, zinc flower, stearic acid, a curing accelerator, a curing acceleration aid, a curing retarder, an anti-ageing agent, a softening agent such as wax or oil, and/or a processing aid.

The method for blending the above-mentioned individual components with each other is not particularly limited, and may be any one selected from a method of kneading, in advance, the blending components other than the vulcanizing components (such as sulfur and the curing accelerator) to prepare a master batch, adding the other components thereto, and further kneading the resultant mixture; a method of kneading, in advance, only the rubber component and the carbon black to prepare a master batch, adding the other components thereto, and further kneading the resultant mixture; a method of adding the individual components to the mixing machine in any order, and kneading the mixture; a method of adding all the components thereto at the same time, and kneading the mixture; and other methods. When the rubber component and the carbon black are beforehand made into a master batch, a wet master batch yielded by incorporating the carbon black into a rubber latex may be used.

The rubber composition according to the present invention is used to produce, for example, a tread (a base trade or cap tread) a side wall, a belt coating rubber, a ply rubber, and/or a bead filler by means of a known equipment, such as an extruder for rubber; an unvalcanized rubber tire having the produced member(s) is shaped; and then the shaped workpiece is vulcanized in a known manner, thereby making it possible to produce a pneumatic tire. When the rubber composition according to the present invention is used to produce, in particular, a tread, a pneumatic tire which is excellent in abrasion resistance and tearing resistance and has a decreased rolling resistance can be produced.

### Examples

Hereinafter, a description will be made about examples demonstrating the structure and the advantageous effects of the present invention specifically, and others. About each evaluating item in the examples, and the others, a rubber sample yielded by heating and vulcanizing any rubber composition at 150°C for 30 minutes was evaluated by a method described below under conditions described below.

### (1) Workability

The workability (of the sample) was evaluated on the basis of the Mooney viscosity (ML₍₁₊₄₎) value obtained by making a measurement according to JIS K6300 under conditions that the period for preheating was 1 minute, the period for rotor-operation was 4 minutes, and the measuring temperature was 100°C. The resultant value was represented by an index relative to the Mooney viscosity (ML₍₁₊₄₎) value of Comparative Example 1 regarded as 100. As the number of the index is smaller, the workability is better.

### (2) Tearing resistance

The tearing resistance was evaluated in accordance with JIS K6252. The resultant value was represented by an index relative to the value of Comparative Example 1 regarded as 100. As the number of the index is larger, the tearing resistance is better.

### (3) Abrasion resistance

The abrasion resistance was evaluated on the basis of the value obtained by making a measurement according to JIS K6264 at a slip ratio of 30%, a load of 40 N and a sand dropping amount of 20 g/minute. The resultant value was represented by an index relative to the value of Comparative Example 1 regarded as 100. As the number of the index is larger, the abrasion resistance is better.

### (4) Low-exothermic-property (tanδ)

The low-exothermic-property was evaluated on the basis of the tanδ value obtained by making a measurement by use of a rheospectrometer manufactured by UBM Co. at an initial strain of 15%, a dynamic strain of ± 2.5%, a frequency of 10 Hz, and a temperature of 60°C. As the value is smaller, the hysteresis property is better.

### Preparation of rubber compositions:

In accordance with each blending formulation in Tables 1 and 2, components were blended with each other, and the resultant blend was kneaded by use of an ordinary Banbury mixer to prepare each rubber composition of Examples 1 to 13 and Comparative Examples 1 to 10. The individual blending agents described in Tables 1 and 2 are as described below (in Tables 1 and 2, the blending amount of each of used carbon black species and the blending agents is represented as the number of parts by mass for 100 parts by mass of the concerned rubber component(s)). The carbon blacks were each produced by a producing process described below.

a) Rubber components:
   natural rubber (NR): "RSS#3",
   butadiene rubber (BR): "BR150L" (manufactured by Ube Industries, Ltd.)
   styrene butadiene rubber (SBR): "JSR1502" (manufactured by JSR Corp.)
b) Zinc flower: "AENKA No. 1" (manufactured by Mitsui Mining & Smelting Co., Ltd.)
c) Stearic acid: "BEADS STEARIC ACID" (manufactured by NOF Corp.)
d) Anti-ageing agent: "ANTIGEN 6C" (manufactured by Sumitomo Chemical Co., Ltd.)
e) Curing accelerator: "SOKSEAL (transliterated) CZ" (manufactured by Sumitomo Chemical Co., Ltd.)
f) Powdery Sulfur (manufactured by Tsurumi Chemical Industry Co., Ltd.)

Carbon black producing process:
Prepared was an oil furnace composed of a burning room having, at a furnace head region, an tangential-line-direction air-supplying opening and a burning burner fitted in the axial direction of the furnace, and a small-diameter reaction room and a large-diameter reaction room which are each in a multi-stage form and has a crude oil spraying nozzle set to be connected coaxially to the burning room. The furnace was used to adjust appropriately the carbon black mixed gas temperature into the range of 1000 to 2200°C, the ratio between the air amount (Nm³/h) and the raw material introduction amount (kg/h) into that of 2.0 to 6.0, the ratio between the air amount (Nm³/h) and the fuel introduction amount (kg/h) into that of 15.0 to 30.0, and the ratio between the raw material introduction amount and the fuel introduction amount into that of 3.0 to 8.0, and adopt one from or a combination of two or more from the following i) to iv) in order to yield each carbon black having a specific surface area, a structure, a surface activity, an aggregate distribution, and a pore degree that are each specified:
i) a divisional introduction of the raw material oil,
ii) the addition of oxygen gas,
iii) the setting of the reaction time into the range of 0.002 to 0.05 second, and
iv) the setting of the drying temperature into the range of 180 to 250°C. In this way, carbon blacks (A) to (E), as the above-mentioned carbon blacks, were each produced. In Table 3 are shown carbon black properties of the carbon blacks (A) to (E). Moreover, in Fig. 1 is shown a graph in which the ratio of (BET5)/(IA) is taken as the transverse axis, the difference of (BET5) - (STSA) is taken as the vertical axis, and measured values of the carbon blacks (A) to (E) are plotted.

As other carbon blacks (F) to (H), use was made of commercially available carbon black products described in the following:
g) carbon black (F): "SEAST 9 (SAF)" (manufactured by Tokai Carbon Co., Ltd.),
h) carbon black (G): "SEAST 6 (ISAF)", (manufactured by Tokai Carbon Co., Ltd.), and
i) carbon black (H): "SEAST KH (HAF)", (manufactured by Tokai Carbon Co., Ltd.),
In Table 3 are shown carbon black properties of the carbon blacks (F) to (H). Moreover, in the graph of Fig. 1 is also shown measured values of the carbon blacks (F) to (H), about the above-mentioned ratio and difference, are plotted.

**Table 1**

| | Example1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| NR | 80 | 80 | 80 | 80 | 80 | 80 | 80 | 100 | 100 | 100 | 60 | 60 | 40 |
| BR | 20 | 20 | 20 | 20 | 20 | 20 | 20 | - | - | - | 40 | 40 | 30 |
| SBR | - | - | - | - | - | - | - | - | - | - | - | - | 30 |
| Carbon black (A) | 40 | 50 | 60 | - | - | - | - | - | - | - | 40 | - | 45 |
| Carbon black (B) | - | - | - | 40 | - | - | - | 30 | 40 | 50 | - | 50 | - |
| Carbon black (C) | - | - | - | - | 40 | - | - | - | - | - | - | - | - |
| Carbon black (D) | - | - | - | - | - | 40 | - | - | - | - | - | - | - |
| Carbon black (E) | - | - | - | - | - | - | 40 | - | - | - | - | - | - |
| Carbon black (F) | - | - | - | - | - | - | - | - | - | - | - | - | - |
| Carbon black (G) | - | - | - | - | - | - | - | - | - | - | - | - | - |
| Carbon black (H) | - | - | - | - | - | - | - | - | - | - | - | - | - |
| Zinc flower | 3 | 3 | 3 | 3 | 3 | 3 | 3 | 3 | 3 | 3 | 3 | 3 | 3 |
| Stearic acid | 1 | 1 | 1 | 1 | 1 | 1 | 1 | 1 | 1 | 1 | 1 | 1 | 1 |
| Anti-ageing agent | 1 | 1 | 1 | 1 | 1 | 1 | 1 | 1 | 1 | 1 | 1 | 1 | 1 |
| Curing accelerator | 1 | 1 | 1 | 1 | 1 | 1 | 1 | 1 | 1 | 1 | 1 | 1 | 1 |
| Powdery sulfur | 2 | 2 | 2 | 2 | 2 | 2 | 2 | 2 | 2 | 2 | 2 | 2 | 2 |
| Workability | 99 | 113 | 124 | 100 | 99 | 100 | 100 | 80 | 93 | 105 | 103 | 114 | 96 |
| Tearing resistance | 95 | 104 | 112 | 97 | 94 | 95 | 96 | 113 | 123 | 132 | 86 | 96 | 94 |
| Abrasion resistance | 98 | 107 | 113 | 97 | 97 | 97 | 98 | 74 | 82 | 91 | 111 | 119 | 102 |
| Low-exothermic-property (tanδ) | 0.0950 | 0.105 | 0.116 | 0.938 | 0.0953 | 0.0961 | 0.0963 | 0.0795 | 0.0882 | 0.0963 | 0.101 | 0.110 | 0.113 |

**Table 2**

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|
| NR | 80 | 80 | 80 | 80 | 80 | 80 | 100 | 100 | 60 | 40 |
| BR | 20 | 20 | 20 | 20 | 20 | 20 | - | - | 40 | 30 |
| SBR | - | - | - | - | - | - | - | - | - | 30 |
| Carbon black (A) | - | - | - | - | - | - | - | - | - | - |
| Carbon black (B) | - | - | - | - | - | - | - | - | - | - |
| Carbon black (C) | - | - | - | - | - | - | - | - | - | - |
| Carbon black (D) | - | - | - | - | - | - | - | - | - | - |
| Carbon black (E) | - | - | - | - | - | - | - | - | - | - |
| Carbon black (F) | - | - | - | 40 | 50 | - | - | - | - | - |
| Carbon black (G) | 40 | 50 | 60 | - | - | - | 30 | 40 | 40 | 45 |
| Carbon black (H) | - | - | - | ' - | - | 40 | - | - | - | - |
| Zinc flower | 3 | 3 | 3 | 3 | 3 | 3 | 3 | 3 | 3 | 3 |
| Stearic acid | 1 | 1 | 1 | 1 | 1 | 1 | 1 | 1 | 1 | 1 |
| Anti-ageing agent | 1 | 1 | 1 | 1 | 1 | 1 | 1 | 1 | 1 | 1 |
| Curing accelerator | 1 | 1 | 1 | 1 | 1 | 1 | 1 | 1 | 1 | 1 |
| Powdery sulfur | 2 | 2 | 2 | 2 | 2 | 2 | 2 | 2 | 2 | 2 |
| Workability | 100 | 112 | 125 | 209 | 122 | 99 | 81 | 93 | 102 | 95 |
| Tearing resistance | 100 | 109 | 120 | 106 | 117 | 77 | 115 | 125 | 89 | 97 |
| Abrasion resistance | 100 | 109 | 116 | 110 | 118 | 98 | 76 | 84 | 114 | 104 |
| Low-exothermic-property (tanδ) | 0.106 | 0.117 | 0.130 | 0.122 | 0.135 | 0.0950 | 0.0877 | 0.0973 | 0.113 | 0.127 |

**Table 3**

| | BET5 (m²/g) | STSA (m²/g) | DBP mL/100g | (BET5) -(STSA) | (BET5) /(IA) | (ΔD-50) /(Dst) |
|---|---|---|---|---|---|---|
| Carbon black (A) | 105 | 96 | 133 | 9 | 1.082 | 0.777 |
| Carbon black (B) | 115 | 107 | 136 | 8 | 1.250 | 0.831 |
| Carbon black (C) | 108 | 98 | 134 | 10 | 1.137 | 1.040 |
| Carbon black (D) | 109 | 102 | 119 | 7 | 1.198 | 0.805 |
| Carbon black (E) | 112 | 104 | 131 | 8 | 1.098 | 0.793 |
| Carbon black (F) | 135 | 120 | 116 | 15 | 0.951 | 0.671 |
| Carbon black (G) | 115 | 105 | 116 | 10 | 0.950 | 0.833 |
| Carbon black (H) | 89 | 83 | 117 | 6 | 1.011 | 0.857 |

From the results in Table 1, it is understood that the cured rubbers of the rubber compositions according to Examples 1 to 13, in which contain any one of the carbon blacks (A) to (E), each satisfy all of the requirements (1) to (4), so that the cured rubbers are each excellent in abrasion resistance, workability and tearing resistance and is further in low-exothermic-property. By contrast, it is understood from the results in Table 2 that the cured rubbers of the rubber compositions according to Comparative Examples 1 to 10, in which contain any one of the carbon blacks (F) to (H), each do not satisfy one or more of the requirements (1) to (4), so that the cured rubber are each bad in one or more out of abrasion resistance, workability, tearing resistance and low-exothermic-property.

## Claims

1. A rubber composition, comprising a rubber component, and a carbon black,
wherein the carbon black satisfies the following (1) to (4):
(1) the dibutyl phthalate (DBP) absorption number [unit: mL/100g] of the carbon black is from 90 to 180,
(2) the difference of the BET specific surface area (BET5) [unit: m²/g] of the carbon black from the external specific surface area (STSA) [unit: m²/g] thereof satisfies the following: 5 < (BET5) - (STSA) < 12,
(3) the ratio between the Stokes diameter (Dst) of the carbon black and the Stokes diameter distribution (ΔD - 50 (half band width)) thereof satisfies the following: 0.70 < the ratio of (ΔD - 50)/(Dst) < 1.10, and
(4) the ratio between the BET specific surface area (BET5) [unit: m²/g] of the carbon black and the iodine adsorption number (IA) [unit: mg/g] thereof satisfies the following: 1.05 < the ratio of (BET5)/(IA) < 1.35.

2. The rubber composition according to claim 1,
wherein the external specific surface area (STSA) [unit: m²/g] of the carbon black is from 75 to 170.

3. The rubber composition according to claim 1,
wherein the blend amount of the carbon black is from 30 to 60 parts by mass for 100 parts by mass of the rubber component.

4. The rubber composition according to claim 2,
wherein the blend amount of the carbon black is from 30 to 60 parts by mass for 100 parts by mass of the rubber component.

5. A pneumatic tire, comprising, as a constituting material thereof, a rubber composition as recited in claim 1.

6. A pneumatic tire, comprising, as a constituting material thereof, a rubber composition as recited in claim 2.

7. A pneumatic tire, comprising, as a constituting material thereof, a rubber composition as recited in claim 3.

8. A pneumatic tire, comprising, as a constituting material thereof, a rubber composition as recited in claim 4.
